# Europäisches Patentamt
# European Patent Office
# Office européen des brevets

(19)

(11) Veröffentlichungsnummer: **0 122 252**
**B1**

(12) # EUROPÄISCHE PATENTSCHRIFT

(45) Veröffentlichungstag der Patentschrift:
23.09.87

(51) Int. Cl.⁴: **E 21 C 35/22**, E 21 C 27/24, E 21 D 9/10

(21) Anmeldenummer: **84890062.7**

(22) Anmeldetag: **30.03.84**

(54) Verfahren zum Besprühen der Meissel und/oder der Ortsbrust mit Druckflüssigkeit sowie Vorrichtung zur Durchführung dieses Verfahrens.

(30) Priorität: **11.04.83 AT 1282/83**

(43) Veröffentlichungstag der Anmeldung:
**17.10.84 Patentblatt 84/42**

(45) Bekanntmachung des Hinweises auf die Patenterteilung:
**23.09.87 Patentblatt 87/39**

(84) Benannte Vertragsstaaten:
**BE DE FR GB SE**

(56) Entgegenhaltungen:
**EP-A-0 014 695**
**EP-A-0 105 047**
**DE-A-2 655 247**
**FR-A-2 345 580**
**GB-A-1 110 763**

(73) Patentinhaber: **VOEST- ALPINE Aktiengesellschaft, Friedrichstrasse 4, A-1011 Wien (AT)**

(72) Erfinder: **Wrulich, Herwig, Haldenweg 4, A-8740 Zeltweg (AT)**
Erfinder: **Zitz, Alfred, Granitzenweg 13b, A-8740 Zeltweg (AT)**
Erfinder: **Schetina, Otto, Dipl.- Ing., Bessemerstrasse 36, A-8740 Zeltweg (AT)**
Erfinder: **Schöffmann, Franz. Dipl- Ing., Niederungweg 12, A-8704 Leoben (AT)**

(74) Vertreter: **Haffner, Thomas M., Dr., Patentanwaltskanzlei Dipl.- Ing. Adolf Kretschmer Dr. Thomas M. Haffner Schottengasse 3a, A-1014 Wien (AT)**

EP 0 122 252 B1

## Beschreibung

Die Erfindung bezieht sich auf ein Verfahren zum Besprühen der Meißel und/oder der Ortsbrust mit Druckflüssigkeit, insbesondere Wasser, unter Verwendung einer Teilschnittschrämmaschine, wobei das Wasser über einen der Ortsbrust zugewendeten Zentriwinkelbereich des Schrämkopfes versprüht wird, sowie eine Vorrichtung für die Zuführung von unter Druck stehender Flüssigkeit, insbesondere Kühlwasser, zu Austrittsöffnungen eines rotierbaren Schrämkopfes, bei welcher die Flüssigkeit über eine axiale Bohrung in einem drehfest mit dem Schrämarm verbundenen Teil in das Innere des Schrämkopfes und über radiale Kanäle zu den Austrittsöffnungen an der Peripherie des Schrämkopfes geführt ist. Zur Verringerung des Wasserverbrauches wurden eine Reihe von Vorschlägen entwickelt, welche darauf abzielen, den Meißel und die Ortsbrust lediglich dann zu kühlen, wenn eine nennenswerte Erwärmung durch die Schneidarbeit auftritt. Es ist beispielsweise bekannt, die Wasserzufuhr von der Belastung der Meißel abhängig zu machen, wofür jedoch relativ aufwendige Konstruktionen erforderlich sind, da jedem einzelnen Meißel ein gesondertes Ventil zugeordnet sein muß. Bei Schrämwalzen ist es weiters bereits bekannt, eine Sektorsteuerung derart vorzusehen, daß Wasser unter Druck lediglich in dem Zentriwinkelbereich der Trommel zu den Austrittsöffnungen gelangt, welcher der Ortsbrust zugewendet ist.

Ein Verfahren der eingangs genannten Art ist beispielsweise der GB-A-1 110 763 zu entnehmen. Dieses bekannte Verfahren dient zum Besprühen der Meißel und/oder der Ortsbrust mit Druckflüssigkeit, insbesondere Wasser, unter Verwendung einer Teilschnittschrämmaschine, wobei das Wasser über einen der Ortsbrust zugewendeten Zentriwinkelbereich des Schrämkopfes versprüht wird.

Aus der EP-A-0 105 047 (Dokument nach Art: 54(3) EPÜ) ist bereits eine Vorrichtung für die Zuführung von unter Druck stehender Flüssigkeit, insbesondere Kühlwasser, zu Austrittsöffnungen eines rotierbaren Schrämkopfes bekanntgeworden, bei welcher die Flüssigkeit über eine axiale Bohrung in einem drehfest mit dem Schrämarm verbundenen Teil in das Innere des Schrämkopfes und über radiale Kanäle zu den Austrittsöffnungen an der Peripherie des Schrämkopfes geführt ist.

Die Erfindung zielt nun darauf ab, ein Verfahren der eingangs genannten Art zu schaffen, bei welchem neben einer deutlichen Verringerung des Wasserverbrauches ohne Gefahr der Überschreitung der Zündtemperaturen von explosiven Gasen in der Grube gearbeitet werden kann. Zur Lösung dieser Aufgabe besteht das erfindungsgemäße Verfahren im wesentlichen darin, daß das Wasser über den der Ortsbrust zugewendeten Zentriwinkelbereich von weniger als 180° des Schrämkopfes intermittierend versprüht wird, wobei die Zeitabstände zwischen den einzelnen Sprühvorgängen kleiner als die Zündverzugszeiten der jeweils vorhandenen zündfähigen Gase gewählt werden. Durch die intermittierende Abgabe der Druckflüssigkeit bzw. des Wassers ergibt sich eine wesentliche Reduktion des Wasserverbrauches, wobei gleichzeitig der Vorteil erreicht wird, daß das abzubauende Gestein immer wieder abgeschreckt, erhitzt und abgeschreckt wird. Eine derartige thermische Belastung des Gesteins erleichtert das Brechen des Materials und es kann der Schneidaufwand und damit der Energieverbrauch verringert werden. Gleichzeitig damit ergibt sich bereits eine Verringerung der maximalen Schneidtemperatur, wodurch die Explosionsgefahr herabgesetzt wird. Die Zeitabstände zwischen den einzelnen Spritz- bzw. Sprühvorgängen müssen hinreichend klein gewählt werden, um eine Zündung von explosiven Gasen mit Sicherheit zu vermeiden, wobei die zeitlichen Abstände der Spritzvorgänge geringer sein müssen als die Zündverzugszeit der jeweiligen Gase, beispielsweise von Methan. Für Methan ergeben sich bei Temperaturen an der Ortsbrust von 650°C beispielsweise Zündverzugszeiten von etwa 10 s und diese Zündverzugszeiten nehmen mit steigender Temperatur rasch ab. So ist bei Temperaturen von etwa 1000°C beispielsweise mit Zündverzugszeiten von etwa 1 s zu rechnen. Erfindungsgemäß wird das Verfahren daher bevorzugt mit einer Spritzfrequenz zwischen 10 und 20 Hz durchgeführt, womit eine optimale Sicherheit gegen Zündung von explosiven Gasen gegeben ist. Unter Berücksichtigung üblicher Drehgeschwindigkeiten von Schrämköpfen ergibt sich hier ein Spritzintervall von etwa 0,1 s, wobei mit Vorteil die Spritzzeit etwa gleich groß dem Intervall zwischen aufeinanderfolgenden Spritzvorgängen gewählt wird.

Das erfindungsgemäße Verfahren läßt sich in besonders einfacher Weise mit einer Vorrichtung der eingangs genannten Art verwirklichen, welche erfindungsgemäß so ausgestaltet ist, daß an die axiale Bohrung eine Mehrzahl von radialen Durchbrechungen anschließt, welche über einen Zentriwinkel von weniger als 180° am Umfang des die axiale Bohrung aufweisenden drehfest mit dem Schrämarm gekuppelten Teiles angeordnet sind und mit einem oder mehreren radialen Kanälen des drehbaren Schrämkopfes zur Erzielung von Spritzintervallen, welche kleiner sind als die Zündverzugszeiten der jeweils vorhandenen zündfähigen Gase, bei Umdrehung desselben fluchten. Zusätzlich zu der Sektorsteuerung, bei welcher die Wasserzuführung in die radialen Kanäle des drehbaren Schrämkopfes über einen vorbestimmten Zentriwinkelbereich der Drehachse bzw. des Kopfes erfolgt, wird hiebei die Unterteilung des Spritzvorganges in einzelne Spritzintervalle in konstruktiv besonders einfacher Weise verwirklicht.

In vorteilhafter Weise sind hiebei die radialen Durchbrechungen über einen Zentriwinkel von 120° - 150°, angeordnet, so daß der Wasserverbrauch auf denjenigen Teilbereich der Umdrehung des Schrämwerkzeuges bzw. Schrämkopfes beschränkt ist in welchem die Meißel mit der Ortsbrust in Berührung gelangen können.

Die radialen Durchbrechungen sind vorzugsweise an einer drehfest mit dem Schrämarm gekuppelten Büchse vorgesehen. Eine derartige mit dem Schrämarm bzw. dem mit dem Schrämarm starr verbundenen Kopfträger gekuppelte Büchse läßt sich in einfacher Weise für Schrämmaschinen mit zwei etwa normal zu einem Schrämarm rotierbar gelagerten Schrämköpfen verwenden, wobei die identische Büchse zu beiden Seiten des Schrämarmes jeweils um 180° verdreht eingesetzt werden kann, so daß der Zentriwinkelbereich, über welchen ein Sprühen von Wasser ermöglicht wird, immer der Ortsbrust zugewendet ist. Zur Erzielung etwa gleicher Spritzzeiten und Intervallzeiten zwischen den einzelnen Spritzvorgängen ist in einfacher Weise der Zentralabstand der radialen Durchbrechungen an der Peripherie der Büchse etwa gleich dem dreifachen lichten Durchmesser der Durchbrechungen gewählt. Die radialen Durchbrechungen können hiebei in einfacher Weise von radialen Bohrungen gebildet sein und es sind innerhalb des Zentriwinkels von weniger als 180° vorzugsweise 6 bis 10 radiale Bohrungen angeordnet, so daß sich unter Berücksichtigung üblicher Umdrehungsgeschwindigkeiten von Schrämköpfen im Bereich von 1 bis 4 s⁻¹ Zündvorgänge mit Sicherheit vermeiden lassen.

Die Erfindung wird nachfolgend an Hand eines in der Zeichnung dargestellten Ausführungsbeispieles näher erläutert.

In dieser zeigen

Fig. 1 einen Querschnitt durch einen Schrämkopf nach dem Stand der Technik.

Fig. 2 einen Querschnitt durch die erfindungsgemäße Wasserzuführung analog dem Schnitt nach Fig. 1 und

Fig. 3 einen Schnitt nach der Linie III-III der Fig. 2 in vergrößerter Darstellung.

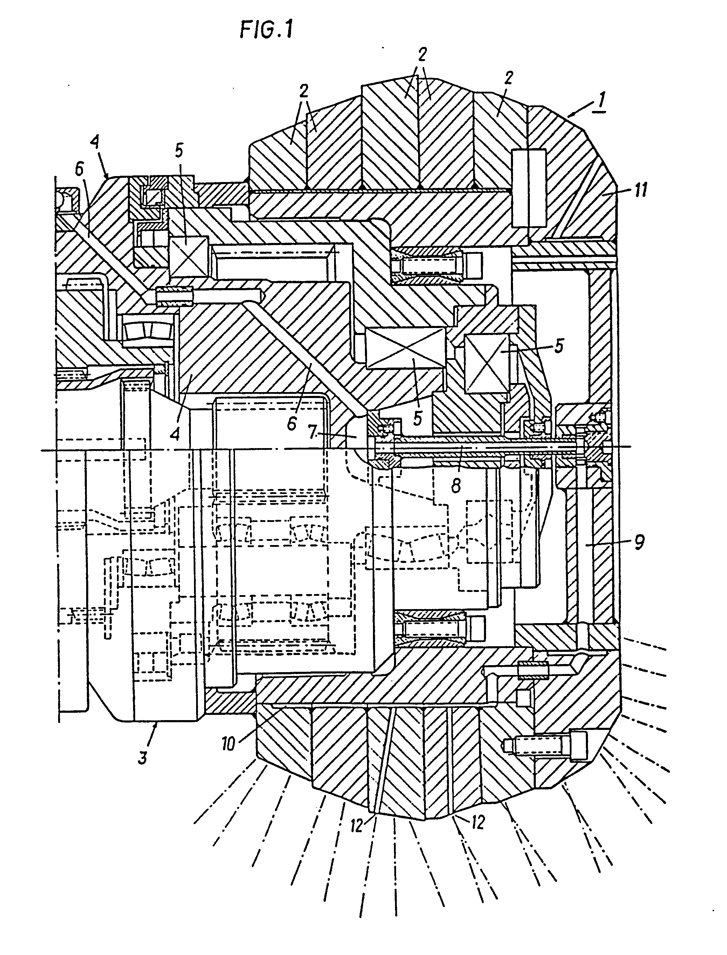

In Fig. 1 ist der Schrämkopf 1 aus miteinander verschweißten Scheiben 2 aufgebaut und drehbar an einem nicht dargestellten Schrämarm gelagert. Die letzte Stufe des Untersetzungsgetriebes ist strichliert mit 3 angedeutet. Die Lagerung des Schrämkopfes 1 an einem mit dem Schrämarm verbundenen Träger 4 erfolgt über Wälzlager 5.

Die Wasserzufuhr erfolgt zunächst über Kanäle 6 im Träger 4 und mündet in einen Verteilerraum 7, über welchen sie über eine axiale Zuführungsleitung 8, welche entsprechend abgedichtet ist, und radiale Leitungen 9 in die sich in Achsrichtung des Schrämkopfes erstreckenden Verteilerhohlräume 10 geführt ist. Die Stirnscheibe 11 des Schrämkopfes 1 ist hiebei durch Schrauben mit dem Grundkörper des Schrämkopfes verbunden. Aus den Verteilerhohlräumen 10 gelangt das Wasser über im wesentlichen radiale Bohrungen 12 zu den Austrittsdüsen, welche im Meißelhalter untergebracht sein können.

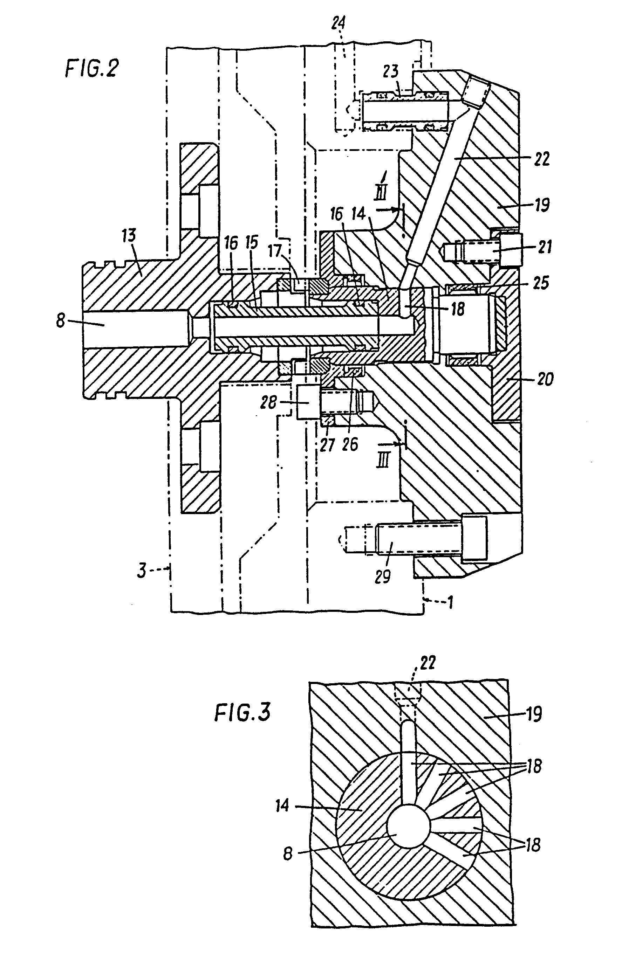

Bei der Ausbildung nach Fig. 2 mündet die axiale Zuführungsleitung 8 in eine drehfest mit dem Träger 13 gekuppelte Büchse 14. Für die Erleichterung der lagerichtigen Festlegung der Büchse 14 geht die axiale Zuführungsleitung 8 über ein dichtendes Zwischenstück 15 in die Büchse 14 über, wobei die Dichtungen mit 16 bezeichnet sind. Die Büchse 14 ist in der jeweiligen Lage durch die Klauenkupplung 17 drehfest mit dem Träger 13 verbunden und weist radiale Bohrungen 18 auf. An der Büchse 14 läuft der Stirnteil 19 des Schrämkopfes um, welcher mit dem Antrieb des Schrämkopfes in analoger Weise wie gemäß der Ausbildung nach Fig. 1 verbunden sein kann. Die Büchse 14 wird durch eine Stirnplatte 20 in ihrer Lage gehalten, wobei diese Stirnplatte 20 mit dem Stirnteil 19 durch Schrauben 21 verbunden ist. Der Stirnteil 19 weist die umlaufenden im wesentlichen radial gerichteten Bohrungen 22 auf, welche über eine Dichtmanschette 23 in die radialen Kanäle 24 zu den Austrittsöffnungen des Schrämkopfes führen. Der an der Büchse 14 umlaufende Stirnteil 19 ist relativ zur Büchse 14 unter Verwendung von Dichtungen 25 und 26 abgedichtet, wobei die Dichtung 26 durch einen an der Büchse 14 abgestützten Abschlußring 27 in ihrer Lage gehalten wird. Der Abschlußring 27 wird durch die Schraube 28 am umlaufenden Stirnteil 19 festgelegt. Die weiteren Teile des beispielsweise aus einzelnen Scheiben aufgebauten Schrämkopfes können beispielsweise durch die Schraube 29 mit dem umlaufenden Stirnteil 19 des Schrämkopfes verbunden sein, wobei der Schrämkopf beispielsweise, wie in Fig. 1 dargestellt, am relativ zum Schrämarm ortsfesten Träger abgestützt ist.

In Fig. 3 ist ersichtlich, daß die radialen Bohrungen 18 der Büchse 14 sich über einen Zentriwinkelbereich von etwa 120° erstrecken, wobei dieser Zentriwinkelbereich von 120° zur Ortsbrust weist.

## Patentansprüche

1. Verfahren zum Besprühen der Meißel und/oder der Ortsbrust mit Druckflüssigkeit, insbesondere Wasser, unter Verwendung einer Teilschnittschrämmaschine, wobei das Wasser über einen der Ortsbrust zugewendeten Zentriwinkelbereich des Schrämkopfes versprüht wird, dadurch gekennzeichnet, daß das Wasser über den der Ortsbrust zugewendeten Zentriwinkelbereich von weniger als 180° des Schrämkopfes intermittierend versprüht wird, wobei die Zeitabstände zwischen den einzelnen Sprühvorgängen kleiner als die Zündverzugszeiten der jeweils vorhandenen zündfähigen Gase gewählt werden.

2. Verfahren nach Anspruch 1, dadurch gekennzeichnet, daß die Spritzfrequenz zwischen 10 und 20 Hz gewählt wird.

3. Vorrichtung zur Durchführung des Verfahrens nach Anspruch 1 oder 2 für die Zuführung von unter Druck stehender Flüssigkeit, insbesondere Kühlwasser, zu Austrittsöffnungen eines rotierbaren Schrämkopfes (1), bei welcher die Flüssigkeit über eine axiale Bohrung (8) in einem drehfest mit dem Schrämarm verbundenen Teil in das Innere des Schrämkopfes (1) und über radiale Kanäle (22) zu den Austrittsöffnungen an der Peripherie des Schrämkopfes (1) geführt ist, dadurch gekennzeichnet, daß an die axiale Bohrung (8) eine Mehrzahl von radialen Durchbrechungen (18) anschließt, welche über einen Zentriwinkel von weniger als 180° am Umfang des die axiale Bohrung (8) aufweisenden drehfest mit dem Schrämarm gekuppelten Teiles (14) angeordnet sind und mit einem oder mehreren radialen Kanälen (22) des drehbaren Schrämkopfes (1) zur Erzielung von Spritzintervallen, welche kleiner sind als die Zündverzugszeiten der jeweils vorhandenen zündfähigen Gase, bei Umdrehung desselben fluchten.

4. Vorrichtung nach Anspruch 3, dadurch gekennzeichnet, daß die radialen Durchbrechungen (18) über einen Zentriwinkel von 120° - 150° angeordnet sind.

5. Vorrichtung nach Anspruch 3 oder 4, dadurch gekennzeichnet, daß die radialen Durchbrechungen (18) an einer drehfest mit dem Schrämarm gekuppelten Büchse (14) vorgesehen sind.

6. Vorrichtung nach Anspruch 3, 4 oder 5, dadurch gekennzeichnet, daß der Zentralabstand der radialen Durchbrechungen (18) an der Peripherie des Büchse (14) etwa gleich dem dreifachen lichten Durchmesser der Durchbrechungen (18) ist.

7. Vorrichtung nach einem der Ansprüche 3 bis 6, dadurch gekennzeichnet, daß die radialen Durchbrechungen von radialen Bohrungen (18) gebildet sind und daß innerhalb des Zentriwinkels von weniger als 180° sechs bis zehn radiale Bohrungen (18) angeordnet sind.

## Claims

1. A method of sprinkling bits and/or workfaces with a pressurised fluid, more particularly water, using a partial section cutting machine, the water being sprayed via a central angle region of the cutting head facing the workface, characterised in that the water is sprayed intermittently via the central angle region, facing the workface, of less than 180° of the cutter head, the time intervals between the individual spraying processes being selected to be smaller than the ignition delay times of the respective ignitable gases present.

2. A method according to claim 1, characterised in that the spraying frequency is selected between 10 and 20 Hz.

3. A device for carrying out the method according to claim 1 or 2 for delivering the fluid, in particular cooling water, to outlet openings of a rotary cutting head (1), in which the fluid is guided via an axial bore (8) in a part connected rotationally rigidly to the cutting arm inside the cutting head (1) and via radial channels (22) to the outlet openings on the periphery of the cutting head (1), characterised in that there are connected to the axial bore (8) a plurality of radial perforations (18) which are arranged over a contral angle region of less than 180° on the periphery of the part (14) having the axial bore (18) and being connected rotationaly rigidly to the cutting arm and aligned with one or more radial channels (22) of the rolary cutting head (1) to obtain spray intervals which are smaller than the ignition delay times of the respective gases present, when the said head rotates.

4. A device according to claim 3, characterised in that the radial perforations (18) are disposed over a central angle of 120° - 150°.

5. A device according to claim 3 or 4, characterised in that the radial perforations (18) are provided on a casing (14) coupled so as to be rotationally rigid with the cutting arm.

6. A device according to claim 3, 4 or 5, characterised in that the central spacing of the radial perforations (18) on the periphery of the casing (14) is approximately equal to treble the inside diameter of the perforations (18).

7. A device according to any one of claims 3 to 6, characterised in that the radial perforations are formed as radial bores (18) and that six to ten radial bores (18) are disposed within the central angle of less than 180°.

## Revendications

1. Procédé de pulvérisation d'un liquide sous pression, en particulier de l'eau, sur les pics et/ou sur le front de taille, avec utilisation d'une machine de havage à coupe partielle, l'eau étant pulvérisée sur un secteur angulaire de la tête de havage dirigé vers le front de taille, caractérisé en ce que l'eau est pulvérisée de façon intermittente sur le secteur angulaire de la tête de havage qui est dirigé vers le front de taille et qui fait moins de 180°, les intervalls de temps séparant les différentes opérations de pulvérisation étant choisis plus faiblas que les temps de retard à l'inflammation des gaz inflammables présents à ce moment-là.

2. Procédé selon la revendication 1, caractérisé en ce que la fréquence de projection est choisie entre 10 et 20 Hz.

3. Dispositif d'application du procédé de la revendication 1 ou 2, pour amener un liquide sous pression, en particulier de l'eau de refroidissement, à des orifices de sortie d'une tête de havage (1) rotative, dispositif avec lequel le liquide est amené aux orifices de sortie situés à

4

la périphérie de la tête da havage (1) en passant par un perçage axial (8), qui se trouve dans une pièce solidaire en rotation du bras de havage et située à l'intérieur de la tête da havage (1), et par des canaux radiaux (22), caractérisé en ce que plusieurs passages (18) radiaux se raccordent au perçage axial (8) et sont disposés, sur un angle au centre inférieur à 180°, sur la périphérie de la partie (14) solidaire en rotation du bras de havage qui comporte le perçage axial (8), tandis qu'ils sont alignés sur un ou plusieurs canaux radiaux (22) de la tête de havage rotative (1) quand celle-ci tourne, afin d'obtenir des intervalles d'injection qui sont plus petits que les temps de retard à l'inflammiation des gaz infammables pésents à ce moment-là.

4. Dispositif selon la revendication 3, caractérisé en ce que les passages radiaux (18) sont situés dans un secteur angulaire de 120 à 150°.

5. Dispositif selon la revendication 3 ou 4, caractérisé en ce que les passages radiaux (18) se trouvent sur une douille (14) accouplée au bras de havage d'une façon assurant la solidacité en rotation.

6. Dispositif selon la revendication 3, 4 ou 5, caractérisé en ce que l'intervalle entre centres des passages radiaux (18), à la périphérie de la douille (14), est à peu près égal au triple du diamètre des passages (18).

7. Dispositif selon l'une des revendications 3 à 6, caractérisé en ce que les passages radiaux sont des perçages radiaux (18) et en ce que six à dix perçages radiaux sont placés à l'intérieur du secteur angulaire de moins de 180°.

## FIG.1

FIG.2

FIG.3